# EUROPEAN PATENT SPECIFICATION

(11) **EP 3 345 810 B1**
(45) Date of publication and mention of the grant of the patent: **03.04.2019**
(21) Application number: 18150181.8
(22) Date of filing: 03.01.2018
(51) Int. Cl.: B62D 33/06, B62D 33/067, B62D 33/07

(54) **TRUCK CABIN TILT HINGE ASSEMBLY**
KIPPSCHARNIERANORDNUNG EINER LKW-KABINE
ENSEMBLE D'ARTICULATION DE BASCULEMENT DE CABINE DE CAMION

(30) Priority: 04.01.2017 NL 2018118
(43) Date of publication of application: 11.07.2018
(73) Proprietor: Daf Trucks N.V., 5643 TW Eindhoven (NL)
(72) Inventor: Vreede, Robert Jacobus, 5643 TW Eindhoven (NL)
(74) Representative: V.O.

(56) References cited:
- WO-A1-2004/089728
- DE-A1- 3 928 945
- DE-A1- 10 261 929
- JP-A- 2004 291 841

## Description

The invention relates to a hinge assembly for a tilting truck cabin according to the preamble of claim 1. Such a hinge assembly for a tilting truck cabin is known from WO-A1-2004/089728.

Tilting truck cabins are commonly found on cab-forward type truck cabins for providing access to engine, drive line, and ancillaries. More recently, in the interest of better aerodynamic properties, cabins have become more enveloping with respect to wheel arches and parts of the chassis by the addition of valances. Because the known tilting truck cabins are hinged about a front pivot to give optimal access to the engine, enveloping parts of the cabin move about an arc and risk interference with vehicle wheels or chassis mounted components, unless sufficient clearance is allowed for. From an aerodynamic point of view any larger than strictly necessary clearance is objectionable. In particular in the interest of aerodynamic improvement it has become common practice to cover the exposed side portions of the chassis frame rails of trucks by skirts or valances. Because truck cabins are suspended on top of the chassis frame rails the forward hinge of tilting truck cabins is also located on top of the chassis frame rails. The now common skirts or valances are therefor fixed stationary to the chassis, while the tiltable truck cabin is a unit separate from the skirt or valance. Such a physical separation between the cabin and the skirt or valance is objectionable from an aerodynamic point of view, as it causes disturbances of the airflow, but is also necessary to prevent interference of the wheel arch with the tire when the cabin is tilted. Hence it would be desirable for at least the front portion of a skirt or valance to be a unitary part of the tilting cab, when wheel arch interference would not exist.

German patent document DE 3928945 C2 provides a four member kinematic chain between a cabin and a truck frame to create a virtual pivot point that at the start of the tilting motion from the non-tilted position is far in front of the truck, but moves closer to the front of the truck during tilting. This has the benefit that initially the cabin moves upwardly substantially vertically, and pivots about a narrower arc only towards its tilted position. While this arrangement is pretty effective in allowing lower skirt or valance parts such as steps to tilt together with the cab, it also introduces additional free play about its four pivots, which may cause noise production when this four pivot link is guiding the cabin suspension during normal use.

Hence a need exists for a mechanism that offers similar benefits, but does not cause noise production, when not in use for tilting the cabin.

Accordingly it is an object of the present invention to propose an improved commercial motor vehicle and cabin tilt mechanism. In a more general sense it is thus an object of the invention to overcome or reduce at least one of the disadvantages of the prior art. It is also an object of the present invention to provide alternative solutions which are less cumbersome in manufacture and operation, and which moreover can be made relatively inexpensively. Alternatively it is an object of the invention to at least provide a useful alternative.

To this end the invention provides for a commercial motor vehicle as defined in one or more of the appended claims. More in particular the present invention relates to a truck cabin tilt hinge assembly in a commercial motor vehicle that comprises a chassis having a pair of parallel elongate chassis beams, an engine mounted between the elongate beams of the chassis, and a driver cab positioned over the engine. The driver cab being forwardly tiltable with respect to the chassis beams to give access to the engine. A pair of opposite swivel arms, each of which is pivotally mounted with a lower end to an associated one of the pair of chassis beams is arranged for pivoting about a first pivot axis extending transversely below a forward end of the chassis beams, and with an upper end pivotally receiving a lower forward portion of the driver cabin for pivoting about a second transverse axis extending upwardly of the chassis beams. A first actuator is operatively interposed between the chassis and the driver cabin, a second actuator is operatively interposed between the chassis and at least one of the opposite swivel arms, and a latch is arranged for being selectively active between at least one of the opposite swivel arms and the chassis.

In the commercial vehicle of the invention the first actuator can be an active actuator. Advantageously the active first actuator can also be a linear hydraulic operated actuator. When use is made of active, for example hydraulically operated actuators and/or an automatically operated latch the sequence of the cabin and swivel arm tilting can be controlled in accordance with a predefined program, with the help of a control unit, such as for the control of a hydraulic sequence circuit.

In an embodiment of the invention the second actuator can also be a passive actuator, such as a linear gas spring. It is then still possible to delay the action of the swivel arm by using an automatically operated latch.

In another embodiment of the invention the swivel arms can additionally or alternatively be adapted to swivel forwardly from a vertical position when the driver cab is tilted from a travelling position into a forwardly tilted position.

In an embodiment of the invention the driver cab can also be suspended on the chassis by resilient spring means, such as by a forward pair of springs, each spring of the forward pair then being associated with a respective one of the swivel arms. Additionally or alternatively each forward spring can extend between a lower mounting point on the respective swivel arm, and an upper mounting point associated with a coupling bracket affixed to the driver cab. Truck cab suspension systems can use air suspension elements or coil spring elements. For the present invention it is irrelevant whether air springs or coil springs are mounted. When in the described example reference is made to air springs, this should be understood as a reference to air or coil springs.

In an embodiment of the invention the first pivot axis can be defined by a pivot connection of the lower ends of each swivel arm with a respective one of a suspension bracket affixed to a forward end of each chassis beam. Each of the second actuators can then advantageously extend between adjacent ones of the suspension brackets and swivel arms.

In an embodiment of the invention the latch can advantageously be operatively interposed between the at least one of the swivel arms and a chassis support mounted on the relevant chassis beam.

Each swivel arm in an embodiment of the invention can be pivotally mounted with a lower end about a lower pivot to an associated one of the pair of chassis beams via a suspension bracket.

In yet a further embodiment of the invention the upper end of the swivel arm can be formed by a torsion stabilizer pivot bearing being the apex of a triangular extension formed by a stabilizer arm, and an air spring both connecting to the swivel arm.

Also in an embodiment of the invention the first actuator can be a linear primary actuator, while the second actuator can be a linear secondary actuator and be operatively interposed between the chassis and at least one of the opposite swivel arms via a suspension bracket attached to a forward end of the relevant chassis beam.

The latch in again a further embodiment of the invention can be arranged to be operably active between the at least one opposite swivel arm and the chassis via a chassis support bracket.

The swivel arm concept according to the present invention can be operated by a hydraulic sequence circuit, which is common in the hydraulic field. Further advantageous aspects of the invention will become clear from the appended description and in reference to the accompanying drawings, in which:
Figure 1 shows a front portion with a driver cab of a commercial motor vehicle, such as a truck;
Figure 2 shows the front portion of Figure 1 with parts of the driver cab body removed to show the underlying structure;
Figure 3 is an enlarged detail of the front end of a truck chassis with the major components of the cab tilting mechanism of the invention;
Figure 4 is an elevation similar to Figure 1, but showing in ghost view the driver cab in a forwardly tilted position;
Figure 5 is a view similar to Figure 2, but with the inner drive cab structure in the forwardly tilted position of Figure 4; and
Figure 6 is a view similar to Figure 3 with the cab tilting mechanism in the forwardly tilted position of Figs. 4 and 5.

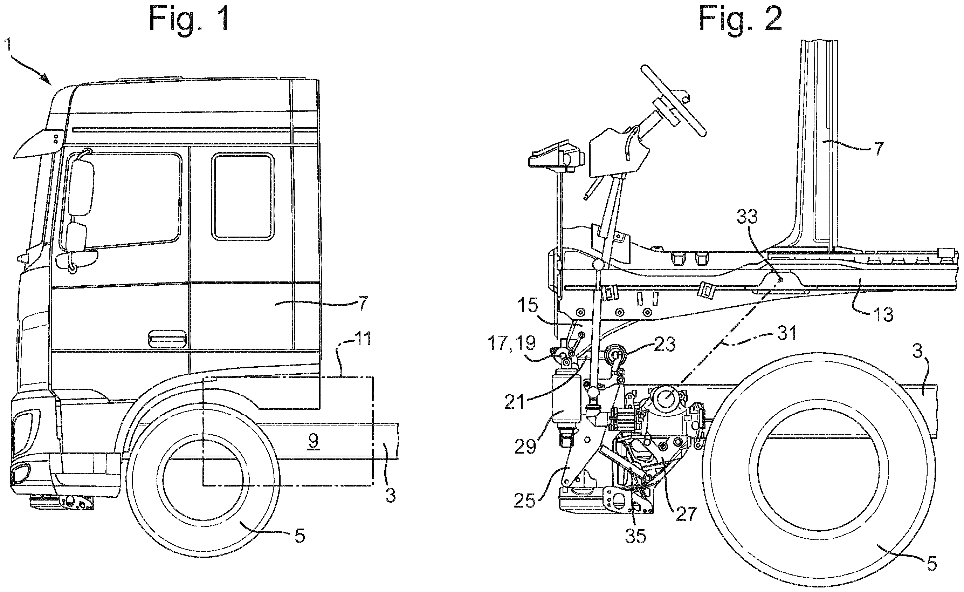

Referring first to Figure 1 the front end of a truck 1 is shown having a chassis 3, a front wheel 5 and a driver cab 7. The chassis 3 is conventionally comprised of a pair of substantially parallel elongate chassis beams 9, of which only one is visible in the side elevations of the drawing Figures. Also conventionally an engine 11 is mounted between the elongate chassis beams 9 and beneath the driver cab 7.

While only schematically indicated in Figure 1, the engine 11 is conventionally positioned, but deleted for clarity from the other drawing Figures.

In Figure 2 the basic structure of the driver cab 7 is shown without the outer paneling, and reveals that the cab 7 has a floor structure 13. The floor structure 13 at a front end has attached thereto a downwardly extending coupling bracket 15 that has a lower pivot bearing 17. The lower pivot bearing 17 of the coupling bracket 15 receives a transverse torsional stabilizer bar 19, which has rearwardly extending stabilizer arms 21. An eyelet 23 at a rear end of each stabilizer arm 23 (only one being visible in the drawing Figures) is pivotally attached to a supporting swivel arm 25. The supporting swivel arm 25 is pivotally connected to a suspension bracket 27 attached to the chassis 3. The driver cab 7 is resiliently suspended with respect to the chassis 3 by means of air springs 29, of which only one is visible in Figure 2. The air spring 29 is operatively interposed between the coupling bracket 15 and the swivel arm 25. Schematically indicated in Figure 2 is a center line of a primary actuator 31, which extends between the chassis 3 and a mounting pivot 33 on the floor structure 13 of the cab 7. Also shown in Figure 2 is a secondary actuator 35, which extends between pivot points on the suspension bracket 27 and on the swivel arm 25.

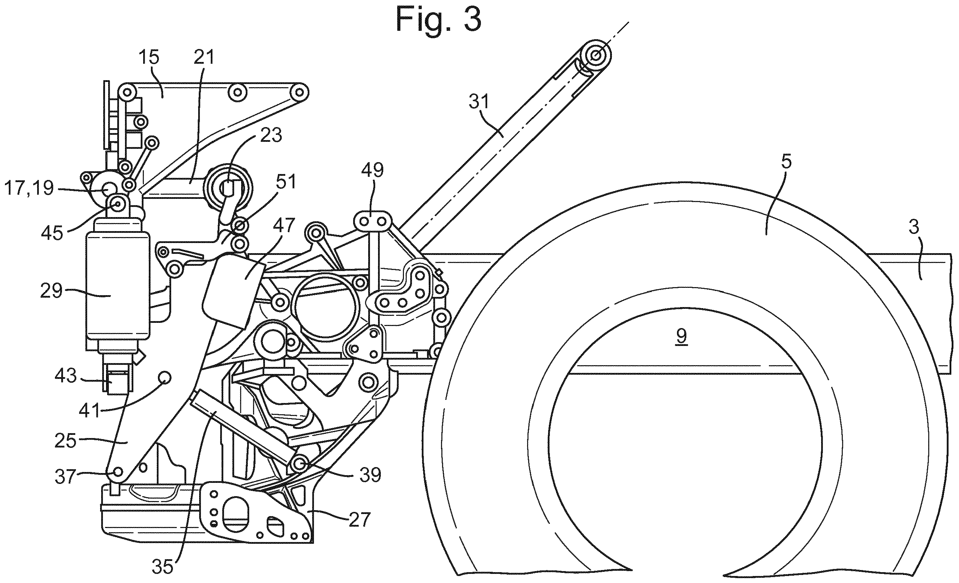

As shown in Figure 3 the swivel arm 25 has a lower pivot 37 about which it can swivel forwardly. The secondary actuator 35 has a first pivot connector 39 on the suspension bracket 27 and a second pivot connection 41 on the swivel arm 25. The air spring 29 has a lower mounting 43 that is operatively associated with the swivel arm 25, and an upper mounting 45 that is operatively associated with the coupling bracket 15. A latch 47 is retaining the swivel arm 25 immobile with respect to a chassis support bracket 49 when the tilting mechanism of Figure 3 is in the driving position. At its upper end, the swivel arm 25 is connected to the eyelet 23 of the stabilizer arm 21 by means of a collision energy absorbing member 51. The collision absorbing member can be of a construction as described in WO 2011/112081.

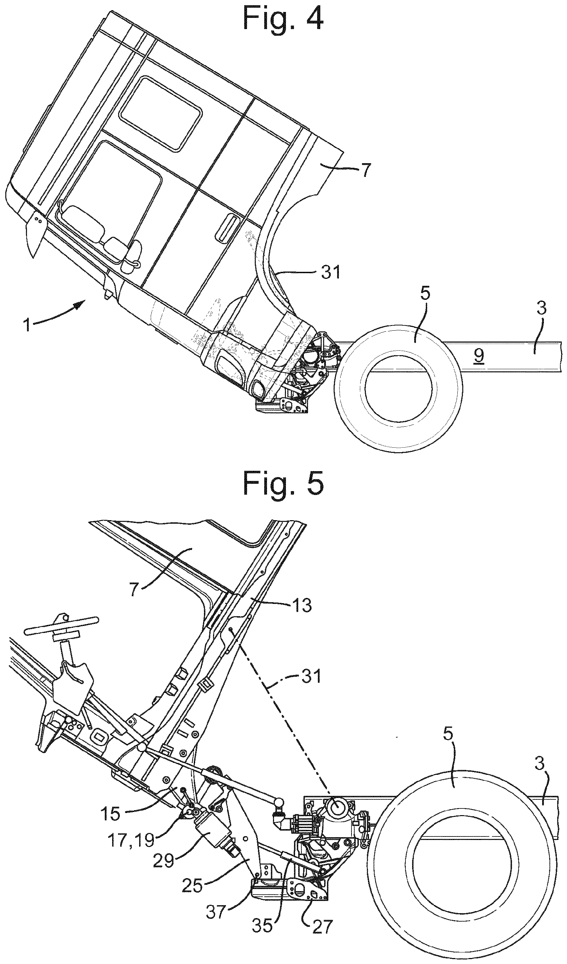

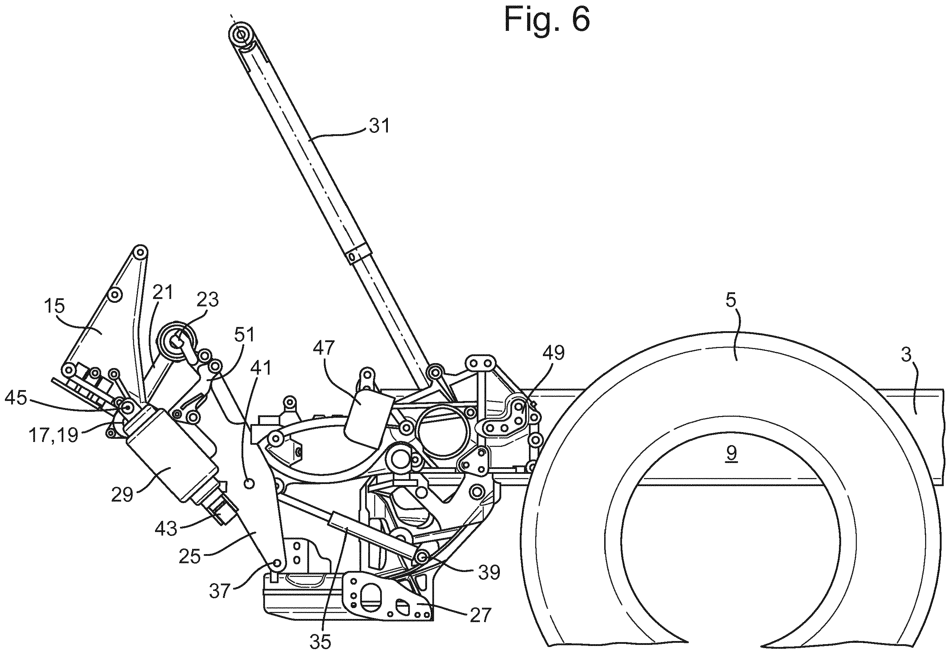

As further illustrated in Figures 4 and 5 the driver cab 7 can be tilted from the driving position as shown in Figures 1 to 3, into a forwardly tilted position as shown in Figures 4 to 6. In this tilted position, both the primary actuator 31 and the secondary actuator 35 are in an extended position. With both actuators 31, 35 in their extended position the swivel arm 25 is pivoted maximally about its lower pivot 37, and the coupling bracket 15 is pivoted maximally about the lower pivot bearing 17.

Actuation of the primary and secondary actuators 31, 35, as well as of the latch 47 can be accomplished by a hydraulic sequence circuit that is conventional in the hydraulic art. The hydraulic tilting system can be either of a manually or electrically operated variety, as is also common in the art. A description of a conventional simple manually operated cab tilting system can be found in patent document US 3706470. In the present driver cab tilting system the primary hydraulic actuator cylinder 31 is supplemented by two secondary hydraulic actuator cylinders 35. The tilting operation is started by operation of a manual or electrical hydraulic pump (not shown, but conventional as explained above). The generated hydraulic pressure is first used to open to the cabin hydraulically operated locks at the rear of the cabin (not shown in the drawing figures, but conventional). In a first phase the cabin will tilt about pivot bearing 17 by energizing the primary hydraulic actuator 31. After about 10 degrees of tilt movement of the primary actuator 31 is interrupted, and the latch 47 retaining the swivel arm 25 is hydraulically or electrically released. In a second phase the arm 25 rotates about the lower pivot 37 by supplying hydraulic pressure to the secondary actuator cylinders 35, in addition to the hydraulic pressure supplied to the primary actuator cylinder 31. This movement is interrupted when the arm 25 has reached its end position, which can be detected by an internal limit switch in the secondary actuator cylinders 35. In a third and final phase the cabin tilts further about pivot bearing 17 until the primary actuator cylinder 31 has reached its internal end position, and thereby bringing the cabin in its fully tilted position. Tilting back is done similarly in reverse order. Conceivably, and depending on the weight of the truck cabin, one or more of the second actuators 35 can also have the form of a passive linear actuator, such as a gas spring. It is then still possible to delay the action of the swivel arm 25 by using the automatically operated latch 47.

Accordingly a truck cabin tilt hinge assembly is disclosed in a commercial motor vehicle (such as a truck 1) that comprises a chassis (3) having a pair of parallel elongate chassis beams (9), an engine (11) mounted between the elongate beams (9) of the chassis (3), and a driver cab (7) positioned over the engine (11). The driver cab (7) is forwardly tiltable with respect to the chassis beams (9) to give access to the engine (11). The vehicle (1) further comprises a pair of opposite swivel arms (25), each of which swivel arms (25) is pivotally mounted with a lower end (lower pivot 37) to an associated one of the pair of chassis beams (9, via suspension bracket 27) for pivoting about a first pivot axis extending transversely below a forward end of the chassis beams (9). An upper end of the swivel arm (25) is pivotally receiving a lower forward portion (coupling bracket 15) of the driver cabin (7) for pivoting about a second transverse axis extending upwardly of the chassis beams. The upper end of the swivel arm (25) is effectively formed by the torsion stabilizer pivot bearing (17) being the apex of a triangular extension formed by the stabilizer arm (21), and the air spring (29) both connecting to the swivel arm (25). A first actuator (linear primary actuator 31) is operatively interposed between the chassis (3) and the driver cabin (7), while a second actuator (linear secondary actuator 35) is operatively interposed between the chassis (3, via suspension bracket 27) and at least one of the opposite swivel arms (25). A latch (47) is arranged to be selectively active between at least one of the opposite swivel arms (25) and the chassis (3, via chassis support bracket 49).

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extend that structure, material, or acts are considered to be essential they are inexpressively indicated as such. Additions, deletions, and modifications within the purview of the skilled person may generally be made without departing from the scope of the invention, as determined by the claims.

## Claims

1. Commercial motor vehicle (1) comprising a chassis (3) having a pair of parallel elongate chassis beams (9), an engine (11) mounted between the elongate beams (9) of the chassis (3), and a driver cab (7) positioned over the engine (11), wherein the driver cab (7) is forwardly tiltable with respect to the chassis beams (9) to give access to the engine (11), further comprising a pair of opposite swivel arms (25), each of which is pivotally mounted with a lower end (37) to an associated one of the pair of chassis beams (9) for pivoting about a first pivot axis, **characterized in that** said first pivot axis extends transversely below a forward end of the chassis beams (9), and **in that** each of said pair of opposite swivel arms (25) is provided with an upper end pivotally receiving a lower forward portion (15) of the driver cabin (7) for pivoting about a second transverse axis extending upwardly of the chassis beams (9), a first actuator (31) being operatively interposed between the chassis (3) and the driver cabin (7), a second actuator (35) being operatively interposed between the chassis (3) and at least one of the opposite swivel arms (25), and a latch (47) being arranged for being selectively active between at least one of the opposite swivel arms (25) and the chassis (3).

2. Commercial vehicle (1) as in claim 1, wherein the first actuator (31) is an active actuator.

3. Commercial vehicle (1) as in claim 2, wherein the active first actuator (31) is a linear hydraulic operated actuator.

4. Commercial vehicle (1) as in one of claims 1, 2 or 3, wherein the second actuator (35) is a passive actuator.

5. Commercial vehicle (1) as in claim 4, wherein the passive second actuator (35) is a linear gas spring.

6. Commercial vehicle (1) as in one of claims 1-5, wherein the swivel arms (25) are adapted to swivel forwardly from a vertical position when the driver cab (7) is tilted from a travelling position into a forwardly tilted position.

7. Commercial vehicle (1) as in one of claims 1-6, wherein the driver cab (7) is suspended on the chassis (3) by resilient spring means.

8. Commercial vehicle (1) as in claim 7, wherein the resilient spring means comprises a pair of forward air springs (29), each air spring (29) of the forward pair being associated with a respective one of the swivel arms (25).

9. Commercial vehicle (1) as in claim 8, wherein each forward air spring (29) extends between a lower mounting point on the respective swivel arm (25), and an upper mounting point associated with a coupling bracket (15) affixed to the driver cab (7).

10. Commercial vehicle (1) as in one of claims 1-9, wherein the first pivot axis is defined by a pivot connection of the lower ends of each swivel arm (25) with a respective one of a suspension bracket (27) affixed to a forward end of each chassis beam (9).

11. Commercial vehicle (1) as in claim 10, wherein each of the second actuators (35) extends between adjacent ones of the suspension brackets (27) and swivel arms (25).

12. Commercial vehicle (1) as in one of claims 1-11, wherein the latch (47) is operatively interposed between the at least one of the swivel arms (25) and a chassis support mounted on the relevant chassis beam.

13. Commercial vehicle (1) as in one of claims 1-12, wherein each swivel arm (25) is pivotally mounted with a lower end about a lower pivot to an associated one of the pair of chassis beams (9) via a suspension bracket (27).

14. Commercial vehicle (1) as in one of claims 1-13, wherein the upper end of the swivel arm (25) is formed by a torsion stabilizer pivot bearing (17) being the apex of a triangular extension formed by a stabilizer arm (21), and an air spring (29) both connecting to the swivel arm (25).

15. Commercial vehicle (1) as in one of claims 1-14, wherein the first actuator (31) operatively interposed between the chassis (3) and the driver cabin (7) is a linear primary actuator, while the second actuator (35) is a linear secondary actuator operatively interposed between the chassis (3) and at least one of the opposite swivel arms (25) via a suspension bracket (27) attached to a forward end of the relevant chassis beam (9).

16. Commercial vehicle (1) as in one of claims 1-15, wherein the latch (47) is arranged to be operably active between the at least one opposite swivel arm (25) and the chassis (3) via a chassis support bracket (49).

## Patentansprüche

1. Nutzkraftfahrzeug (1), umfassend ein Fahrgestell (3) mit einem Paar paralleler langgestreckter Fahrgestellträger (9), einen Motor (11), der zwischen den langgestreckten Trägern (9) des Fahrgestells (3) montiert ist, und eine Fahrerkabine (7), die über dem Motor (11) positioniert ist, wobei die Fahrerkabine (7) nach vorn kippbar in Bezug auf die Fahrgestellträger (9) ist, um Zugang zu dem Motor (11) zu gewähren, ferner ein Paar gegenüberliegender Dreharme (25) umfassend, von denen jeder schwenkbar mit einem unteren Ende (37) an einem dazugehörigen des Paares von Fahrgestellträgern (9) zum Schwenken um eine erste Schwenkachse montiert ist, **dadurch gekennzeichnet, dass** sich die erste Schwenkachse quer unter einem vorderen Ende der Fahrgestellträger (9) erstreckt, und dadurch, dass jeder des Paars gegenüberliegender Dreharme (25) mit einem oberen Ende versehen ist, das schwenkbar einen unteren vorderen Abschnitt (15) der Fahrerkabine (7) zum Schwenken um eine zweite Querachse aufnimmt, die sich oberhalb der Fahrgestellträger (9) erstreckt, wobei ein erster Aktor (31) funktionsmäßig zwischen dem Fahrgestell (3) und der Fahrerkabine (7) eingefügt ist, ein zweiter Aktor (35) funktionsmäßig zwischen dem Fahrgestell (3) und wenigstens einem der gegenüberliegenden Dreharme (25) eingefügt ist und eine Sperre (47) dafür angeordnet ist, zwischen wenigstens einem der gegenüberliegenden Dreharme (25) und dem Fahrgestell (3) selektiv aktiv zu sein.

2. Nutzfahrzeug (1) nach Anspruch 1,wobei der erste Aktor (31) ein aktiver Aktor ist.

3. Nutzfahrzeug (1) nach Anspruch 2, wobei der aktive erste Aktor (31) ein hydraulisch betriebener Linearaktor ist.

4. Nutzfahrzeug (1) nach einem der Ansprüche 1, 2 oder 3, wobei der zweite Aktor (35) ein passiver Aktor ist.

5. Nutzfahrzeug (1) nach Anspruch 4, wobei der passive zweite Aktor (35) eine lineare Gasfeder ist.

6. Nutzfahrzeug (1) nach einem der Ansprüche 1 bis 5, wobei die Dreharme (25) dafür eingerichtet sind, von einer vertikalen Position nach vorn zu drehen, wenn die Fahrerkabine (7) von einer Fahrposition in eine nach vorn gekippte Position gekippt ist.

7. Nutzfahrzeug (1) nach einem der Ansprüche 1 bis 6, wobei die Fahrerkabine (7) mit einem elastischen Federmittel an dem Fahrgestell (3) aufgehängt ist.

8. Nutzfahrzeug (1) nach Anspruch 7, wobei das elastische Federmittel ein Paar vorderer Luftfedern (29) umfasst, wobei jede Luftfeder (29) des vorderen Paars einem entsprechenden der Dreharme (25) zugehörig ist.

9. Nutzfahrzeug (1) nach Anspruch 8, wobei sich jede vordere Luftfeder (29) zwischen einem unteren Montagepunkt an dem entsprechenden Dreharm (25) und einem oberen Montagepunkt erstreckt, der einem Kopplungsbügel (15) zugehörig ist, der an der Fahrerkabine (7) befestigt ist.

10. Nutzfahrzeug (1) nach einem der Ansprüche 1 bis 9, wobei die erste Schwenkachse durch eine Schwenkverbindung der unteren Enden jedes Dreharms (25) mit einem entsprechenden eines Aufhängungsbügels (27), der an einem vorderen Ende jedes Fahrgestellträgers (9) befestigt ist, definiert ist.

11. Nutzfahrzeug (1) nach Anspruch 10, wobei sich jeder der zweiten Aktoren (35) zwischen benachbarten der Aufhängungsbügel (27) und der Dreharme (25) erstreckt.

12. Nutzfahrzeug (1) nach einem der Ansprüche 1 bis 11, wobei die Sperre (47) funktionsmäßig zwischen dem wenigstens einen der Dreharme (25) und einer Fahrgestellhalterung, die an dem jeweiligen Fahrgestellträger montiert ist, eingefügt ist.

13. Nutzfahrzeug (1) nach einem der Ansprüche 1 bis 12, wobei jeder Dreharm (25) schwenkbar mit einem unteren Ende um einen unteren Drehpunkt über einen Aufhängungsbügel (27) an einem zugehörigen des Paars von Fahrgestellträgern (9) montiert ist.

14. Nutzfahrzeug (1) nach einem der Ansprüche 1 bis 13, wobei das obere Ende des Dreharms (25) von einem Torsionsstabilisator-Drehpunktlager (17) gebildet wird, das der Scheitelpunkt einer dreieckigen Erweiterung ist, die von einem Stabilisatorarm (21) und einer Luftfeder (29) gebildet wird, die beide mit dem Dreharm (25) verbinden.

15. Nutzfahrzeug (1) nach einem der Ansprüche 1 bis 14, wobei der erste Aktor (31), der funktionsmäßig zwischen dem Fahrgestell (3) und der Fahrerkabine (7) eingefügt ist, ein primärer Linearaktor ist, während der zweite Aktor (35) ein sekundärer Linearaktor ist, der über einen Aufhängungsbügel (27), der an einem vorderen Ende des jeweiligen Fahrgestellträgers (9) angebracht ist, funktionsmäßig zwischen dem Fahrgestell (3) und wenigstens einem der gegenüberliegenden Dreharme (25) eingefügt ist.

16. Nutzfahrzeug (1) nach einem der Ansprüche 1 bis 15, wobei die Sperre (47) angeordnet ist, um zwischen dem wenigstens einen gegenüberliegenden Dreharm (25) und dem Fahrgestell (3) über einen Fahrgestellhalterungsbügel (49) funktionsmäßig aktiv zu sein.

## Revendications

1. Véhicule utilitaire à moteur (1) comprenant un châssis (3) ayant une paire de poutres de châssis allongées parallèles (9), un moteur (11) monté entre les poutres allongées (9) du châssis (3), et une cabine de conducteur (7) positionnée au-dessus du moteur (11), la cabine de conducteur (7) pouvant s'incliner vers l'avant par rapport aux poutres de châssis (9) pour fournir l'accès au moteur (11), comprenant en outre une paire de bras pivotants (25) opposés, dont chacun est monté, de manière pivotante, avec une extrémité inférieure (37) sur une poutre associée de la paire de poutres de châssis (9) pour pivoter autour d'un premier axe de pivot, **caractérisé en ce que** ledit premier axe de pivot s'étend de manière transversale au-dessous d'une extrémité avant des poutres de châssis (9), et **en ce que** chacun de ladite paire de bras pivotants (25) opposés est prévu avec une extrémité supérieure recevant, de manière pivotante, une partie avant inférieure (15) de la cabine de conducteur (7) pour pivoter autour d'un second axe transversal s'étendant vers le haut depuis les poutres de châssis (9), un premier actionneur (31) étant intercalé, de manière opérationnelle, entre le châssis (3) et la cabine de conducteur (7), un second actionneur (35) étant intercalé, de manière opérationnelle, entre le châssis (3) et au moins l'un des bras pivotants (25) opposés et un verrou (47) qui est agencé pour être sélectivement actif entre au moins l'un des bras pivotants (25) opposés et le châssis (3).

2. Véhicule utilitaire (1) selon la revendication 1, dans lequel le premier actionneur (31) est un actionneur actif.

3. Véhicule utilitaire (1) selon la revendication 2, dans lequel le premier actionneur actif (31) est un actionneur linéaire actionné par voie hydraulique.

4. Véhicule utilitaire (1) selon l'une des revendications 1, 2 ou 3, dans lequel le second actionneur (35) est un actionneur passif.

5. Véhicule utilitaire (1) selon la revendication 4, dans lequel le second actionneur passif (35) est un ressort à gaz linéaire.

6. Véhicule utilitaire (1) selon l'une des revendications 1 à 5, dans lequel les bras pivotants (25) sont adaptés pour pivoter vers l'avant à partir d'une position verticale lorsque la cabine de conducteur (7) est inclinée d'une position de déplacement vers une position inclinée vers l'avant.

7. Véhicule utilitaire (1) selon l'une des revendications 1 à 6, dans lequel la cabine de conducteur (7) est suspendue sur le châssis (3) par un moyen de ressort résilient.

8. Véhicule utilitaire (1) selon la revendication 7, dans lequel le moyen de ressort résilient comprend une paire de ressorts pneumatiques avant (29), chaque ressort pneumatique (29) de la paire avant étant associé avec un bras respectif des bras pivotants (25).

9. Véhicule utilitaire (1) selon la revendication 8, dans lequel chaque ressort pneumatique avant (29) s'étend entre un point de montage inférieur sur le bras pivotant (25) respectif, et un point de montage supérieur associé à un support de couplage (15) fixé sur la cabine de conducteur (7).

10. Véhicule utilitaire (1) selon l'une des revendications 1 à 9, dans lequel le premier axe de pivot est défini par un raccordement de pivot des extrémités inférieures de chaque bras pivotant (25) avec un support respectif d'un support de suspension (27) fixé sur une extrémité avant de chaque poutre de châssis (9).

11. Véhicule utilitaire (1) selon la revendication 10, dans lequel chacun des seconds actionneurs (35) s'étend entre des éléments adjacents parmi le support de suspension (27) et les bras pivotants (25).

12. Véhicule utilitaire (1) selon l'une des revendications 1 à 11, dans lequel le verrou (47) est intercalé, de manière opérationnelle entre au moins l'un parmi les bras pivotants (25) et un support de châssis monté sur la poutre de châssis appropriée.

13. Véhicule utilitaire (1) selon l'une des revendications 1 à 12, dans lequel chaque bras pivotant (25) est monté, de manière pivotante, avec une extrémité inférieure autour d'un pivot inférieur sur une poutre associée de la paire de poutres de châssis (9) via un support de suspension (27).

14. Véhicule utilitaire (1) selon l'une des revendications 1 à 13, dans lequel l'extrémité supérieure du bras pivotant (25) est formée par un palier de pivot de stabilisateur de torsion (17) qui est le sommet d'une extension triangulaire formée par un bras de stabilisateur (21) et un ressort pneumatique (29) se raccordant tous deux au bras pivotant (25).

15. Véhicule utilitaire (1) selon l'une des revendications 1 à 14, dans lequel le premier actionneur (31) intercalé, de manière opérationnelle entre le châssis (3) et la cabine de conducteur (7) est un actionneur principal linéaire, alors que le second actionneur (35) est un actionneur secondaire linéaire intercalé, de manière opérationnelle, entre le châssis (3) et au moins l'un des bras pivotants (25) opposés via un support de suspension (27) fixé sur une extrémité avant de la poutre de châssis (9) appropriée.

16. Véhicule utilitaire (1) selon l'une des revendications 1 à 15, dans lequel le verrou (47) est agencé pour être opérationnellement actif entre au moins l'un parmi le bras pivotant (25) opposé et le châssis (3) via une console de support de châssis (49).
